# EUROPÄISCHE PATENTANMELDUNG

(11) **EP 1 361 645 A1**
(43) Veröffentlichungstag der Anmeldung: **12.11.2003**
(21) Anmeldenummer: 03101185.1
(22) Anmeldetag: 29.04.2003
(51) Int. Cl.: H02K 9/06, H02K 9/12

(54) **Axialventilatorgekühlter Turbogenerator mit verstellbarem Vordrall**

(30) Priorität: 08.05.2002 CH 7832002
(71) Anmelder: ALSTOM (Switzerland) Ltd, 5401 Baden (CH)
(72) Erfinder: Baer, Jürgen, 5506, Mägenwil (CH); Hirsch, Christoph, Dr., 85386, Eching (DE); Schleussinger, Armin, Dr., 5210, Windisch (CH)

(57) **Zusammenfassung**

Eine gasgekühlte, rotierende elektrische Maschine, insbesondere Turbogenerator (1), hat einen drehbar gelagerten Rotor (4) und einem den Rotor (4) konzentrisch umgebenden Stator (3), welche in einem Gehäuse (2) untergebracht sind, wobei zur Kühlung der Maschine an dem Rotor (4) stirnseitig wenigstens ein Axialventilator (5) angeordnet ist, welcher ein gasförmiges Kühlmedium aus einem koaxialen Saugraum (10) ansaugt und in einen Druckraum (11) drückt.

Bei einer solchen Maschine eine Verbesserung des Wirkungsgrades dadurch erreicht, dass im Bereich des Saugraumes (10) auf einer Seite zur Veränderung der Kennlinie des Axialventilators (5) eine verstellbare Leiteinrichtung (19) vorgesehen ist, mittels derer das in den Saugraum (10) einströmende Kühlmedium auf die Drehrichtung des Axialventilators (5) bezogen wahlweise mit einem Mitdrall oder einem Gegendrall oder einer Mischung aus beiden Drallarten beaufschlagt wird.

## Beschreibung

### TECHNISCHES GEBIET

Die vorliegende Erfindung bezieht sich auf das Gebiet der elektrischen Maschinen. Sie betrifft eine gasgekühlte, rotierende elektrische Maschine, insbesondere Turbogenerator, gemäss dem Oberbegriff des Anspruchs 1. Sie betrifft weiterhin ein Verfahren zum Betrieb einer solchen Maschine.

### STAND DER TECHNIK

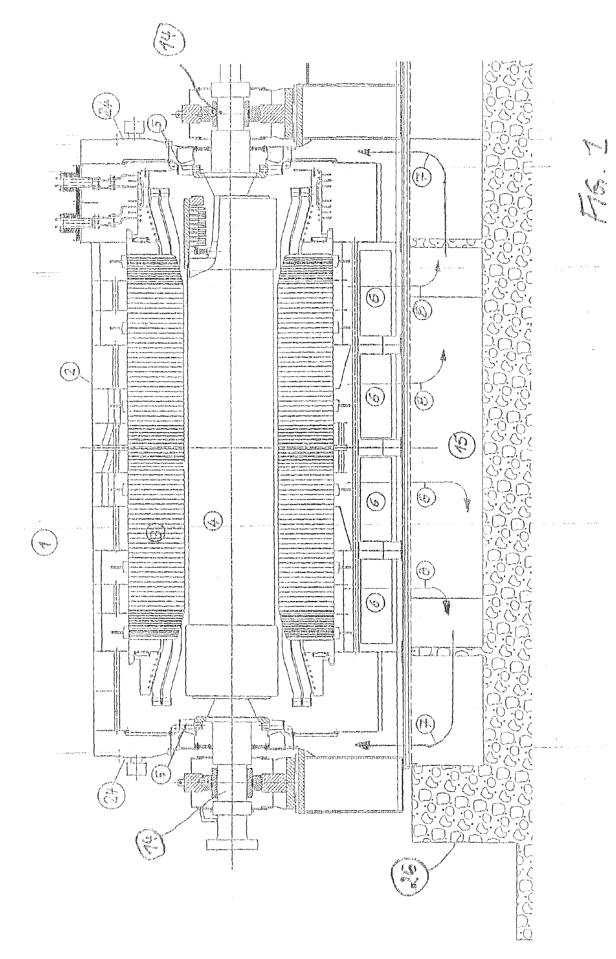

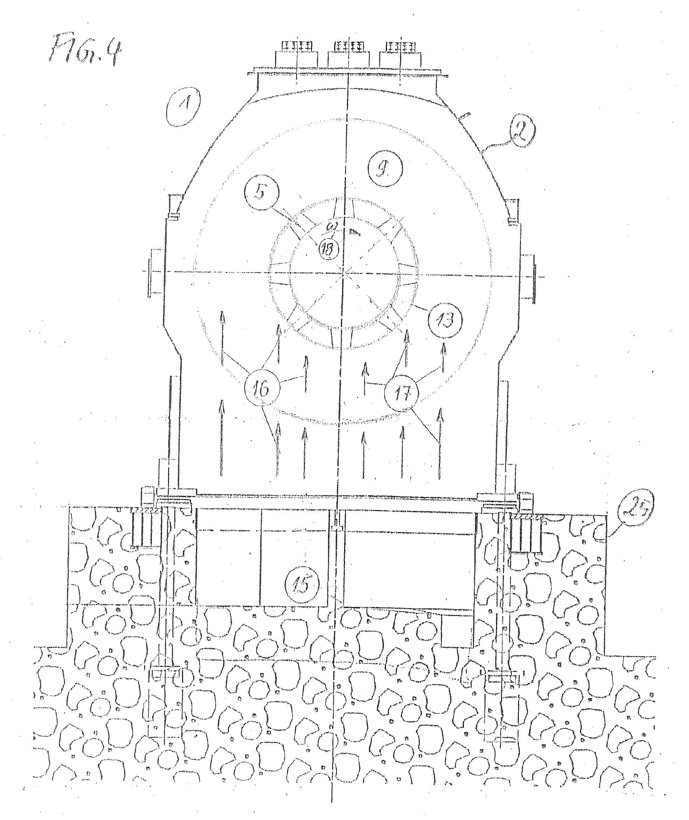

Gasgekühlte Turbogeneratoren, wie sie beispielsweise in der US-A-5,557,153 oder US-A-6,124,653 beschrieben sind, erhalten zur Abfuhr ihrer elektrischen und mechanischen Wärmeverluste in den meisten Fällen an der Generatorwelle stirnseitig angeordnete Axialventilatoren. Der prinzipielle Aufbau eines solchen gasgekühlten Turbogenerators ist im Längsschnitt in der Fig. 1 wiedergegeben. Der bekannte Turbogenerator 1 ist auf einem Fundament 25 ruhend in einem Gehäuse 2 untergebracht. Er umfasst einen in Lagern 14 um eine horizontale Maschinenachse drehbar gelagerten Rotor 4, der konzentrisch von einem Stator 3 umgeben ist. Der Rotor 4 hat stirnseitig auf der Rotorwelle jeweils einen Axialventilator 5. Das mittels der Axialventilatoren 5 durch den Generator 1 gedrückte gasförmige Kühlmedium wird in unterhalb der Maschinenachse zwischen Stator 3 und Fundament 25 angeordneten Kühlern 6 auf die vorgeschriebene/vereinbarte Norm-Kühlmitteltemperatur zurückgekühlt. Die Strömungsrichtung des Kühlmediums in den Kühlern 6 ist durch erste Pfeile gekennzeichnet (Kühlmediumströmung 8). Die Zuströmung des Kühlmediums zu den Axialventilatoren 5 zeigen zweite Pfeile (Kühlmediumströmung 7), wobei das Kühlmedium aus einem Ansaug- oder Kaltgasraum 15 geholt wird. Der Kaltgasraum 15 kann gemäss Kundenvereinbarung oder Kraftwerks-Gestaltung auf jeder beliebigen Seite des Generators angeordnet werden (im Uhrzeigersinn auf 3, 6, 9 oder 12 Uhr; im vorliegenden Beispiel ist er auf 6-Uhr-Position; siehe auch Fig. 4).

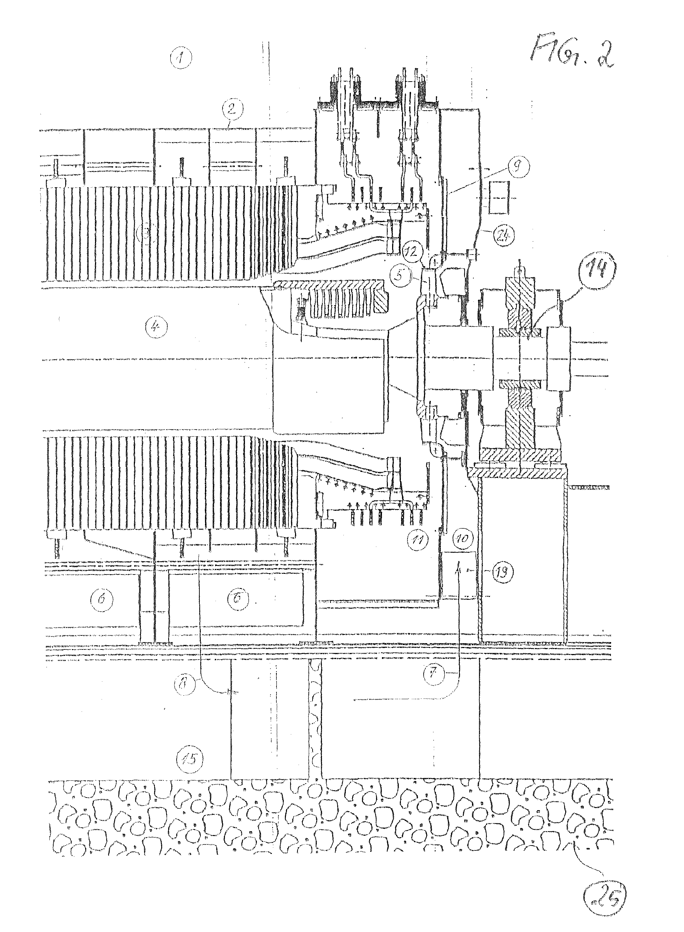

Fig. 2 zeigt die nähere Umgebung des einen (rechten) Axialventilators 5 aus Fig. 1 in einem vergrösserten Ausschnitt mit einer Innenverschalung 9, einem Saugraum 10 und einem Druckraum 11. Die Innenverschalung 9 trennt den Saugraum 10 vom Druckraum 11. Der Axialventilator 5 saugt im Saugraum 10 das gasförmige Kühlmedium (z.B. Luft) an und drückt es in den Druckraum 11. Um eine möglichst geringe Rückströmung zu erreichen, ist an der Innenverschalung 9 um den Axialventilator 5 herum eine Spitzenabdeckung 12 angeordnet, welche in den Druckraum 11 ragt.

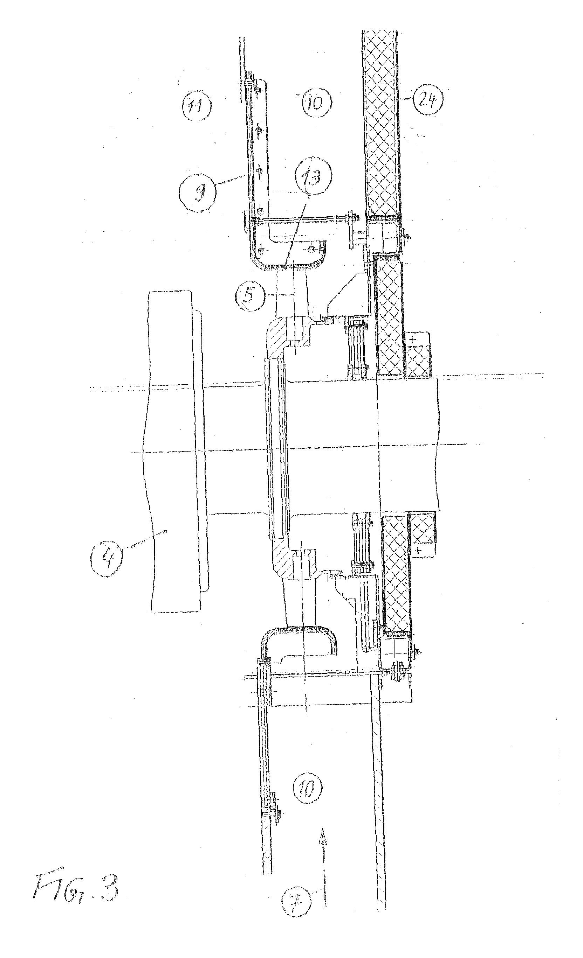

Fig. 3 zeigt (in einem noch stärker vergrösserten Ausschnitt) lediglich eine etwas andere Ausführung der Innenverschalung 9, bei der die Spitzenabdeckung 13 des Axialventilators 5 nicht in den Druckraum, sondern in den Saugraum 10 ragt.

Fig. 4 schliesslich gibt den Blick in Richtung der Maschinenachse in den durch Weglassen der Ventilator-Aussenverschalung 24 (Fig. 3) geöffneten Ventilator-Saugraum 10 wieder, wobei man stirnseitig auf den Axialventilator 5 mit seiner Drehrichtung 18 sowie die durch Pfeile dargestellte Kühlmedium-Zuströmung (Zuströmung 16, 17) zum Axialventilator 5 sieht. Die Fig. 4 verdeutlicht, dass der Axialventilator 5 bei der Zuströmung 16 durch einen Mitdrall (in Drehrichtung 18 des Ventilators) und bei der Zuströmung 17 durch einen Gegendrall (entgegen der Drehrichtung 18 des Ventilators) angeströmt wird. Dies führt zu einer über den Umfang des Axialventilators 5 ungleichmässigen Druckerzeugung sowie Mittelförderung, was schlussendlich in einer Minderleistung des Axialventilators 5 und damit der Kühlung insgesamt endet.

Da Turbogeneratoren wegen der der Turbine angepassten Leistungsabgabe vorwiegend mit konstanter Last betrieben werden, arbeiten die axialen Kühlkreisventilatoren 5 je nach Auslegung und Fertigung in einem mehr oder weniger sehr guten Wirkungsgradbereich. Bei grösseren Turbogeneratoren mit Luftkühlung können die Ventilationsverluste einen Verlustanteil bis zu 50% und leicht darüber erreichen. Dies gilt selbstverständlich für den Auslegungspunkt/Nennpunkt des Generators. Wird ein Turbogenerator 1 durch Lastschwankungen oder Kühlerausfall für längere Zeiten im Teillastbetrieb gefahren, geht der Generatorwirkungsgrad durch die konstant bleibenden Ventilationsverluste merklich zurück. Ohne den Generator abzustellen und die Ventilatorschaufeln umzustaffeln - sofern diese überhaupt verstellbar sind -, besteht zur Zeit keine Möglichkeit, die Ventilationsverluste zu reduzieren und somit den Generatorwirkungsgrad anzuheben, was zu einer Brennstoffreduktion führen würde. Als gravierender Nachteil ergibt sich also für die bekannten Turbogeneratoren eine durch die Ventilationsverluste hervorgerufene Energieverschwendung.

### DARSTELLUNG DER ERFINDUNG

Es ist daher Aufgabe der Erfindung, eine gasgekühlte rotierende elektrische Maschine, insbesondere einen Turbogenerator, zu schaffen, welche(r) die Nachteile der bekannten Maschinen vermeidet und sich insbesondere durch deutlich reduzierte Ventilationsverluste auszeichnet.

Die Aufgabe wird durch die Gesamtheit der Merkmale des Anspruchs 1 gelöst. Der Kern der Erfindung besteht darin, im Bereich des Saugraumes auf einer Seite (im Uhrzeigersinn auf 3, 6, 9 oder 12 Uhr) eine verstellbare Leiteinrichtung vorzusehen, mittels derer das in den Saugraum einströmende Kühlmedium auf die Drehrichtung des Axialventilators bezogen wahlweise mit einem Mitdrall oder einem Gegendrall oder einer Mischung aus beiden Drallarten beaufschlagt wird. Hierdurch lässt sich die Kennlinie des Axialventilators so verändern, dass sie den unterschiedlichen Betriebsbedingungen im Hinblick auf den Wirkungsgrad optimal angepasst werden kann. Die seitliche Anordnung der Leiteinrichtung sorgt dafür, dass die Leiteinrichtung - anders als bei einer koaxial zum Ventilator auf gleicher Ebene angeordneten Variante - konstruktiv und fertigungstechnisch günstig im Gehäuse des Generators so integriert werden kann, dass der Vordrall für den Axialventilator in einfacher Weise von Mitdrall auf Gegendrall verändert werden kann. Eine koaxiale Anordnung der Leiteinrichtung dagegen wäre aus schwingungstechnischen Gründen der Generatorwelle - wegen der notwendigen Verlängerung der Generatorwelle - nicht möglich.

Bevorzugt steht der Saugraum mit einem auf einer Seite ausserhalb der Maschine angeordneten Kaltgasraum in Verbindung, aus welchem das rückgekühlte Kühlmedium in den Saugraum einströmt, und ist die Leiteinrichtung zwischen dem Kaltgasraum und dem Saugraum angeordnet. Der Kaltgasraum kann dabei auch im Generatorgehäuse integriert sein.

Eine bevorzugte Ausgestaltung der Leiteinrichtung ist dadurch gekennzeichnet, dass die Leiteinrichtung eine Mehrzahl von parallel stehenden, verstellbaren Leitschaufeln umfasst, und dass die Leitschaufeln der Leiteinrichtung in einer quer zur Zuströmrichtung des Kühlmediums in den Saugraum verlaufenden Linie hintereinander angeordnet und in ihrer Winkelstellung relativ zur Zuströmrichtung verstellbar sind. Die Leitschaufeln sind dabei vorzugsweise gemeinsam verstellbar.

Insbesondere können die Leitschaufeln von ausserhalb des Gehäuses mittels einer mechanischen Betätigungsvorrichtung, insbesondere eines Gestänges, manuell und/oder automatisch verstellbar sein. Auch kann zur Verstellung der Leitschaufeln ein Stellmotor vorgesehen sein.

Bevorzugt weisen die Leitschaufeln alle dieselbe Schaufelform auf, und zwar entweder eine gestreckte Schaufelform, oder ein Tropfenprofil.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem vereinfachten Längsschnitt einen gasgekühlten Turbogenerator mit zwei stirnseitigen Axialventilatoren für den Betrieb des Kühlkreislaufes aus dem Stand der Technik;
- Fig. 2: einen vergrösserten Ausschnitt aus Fig. 1, welcher den einen (rechten) Axialventilator zeigt, und in welchem zugleich eine Leiteinrichtung für den Axialventilator gemäss einem bevorzugten Ausführungsbeispiel der Erfindung eingezeichnet ist;
- Fig. 3: eine vergrösserte Darstellung eines Axialventilators eines Turbogenerators aus dem Stand der Technik mit einer gegenüber Fig. 1 abgeänderten Spitzenabdeckung des Axialventilators;
- Fig. 4: den Blick in Richtung der Maschinenachse in den durch Weglassen der Ventilator-Aussenverschalung geöffneten Ventilator-Saugraum der Maschine aus Fig. 3;
- Fig. 5-7: in einer zu Fig. 4 vergleichbaren Darstellung einen Turbogenerator mit einer Leiteinrichtung gemäss der Erfindung in drei unterschiedlichen Stellungen, die einem unterschiedlichen Vordrall der Kühlmediumsströmung entsprechen, nämlich einer neutralen Stellung (Fig. 5), maximalem Mitdrall (Fig. 6) und maximalem Gegendrall (Fig. 7); und
- Fig. 8: in einer zu Fig. 4 vergleichbaren Darstellung einen Turbogenerator mit einer Leiteinrichtung gemäss der Erfindung mit unterschiedlichen Arten von beispielhaften Leitschaufeln.

In Fig. 2 und Fig. 5-7 ist aus unterschiedlichen Blickrichtungen ein bevorzugtes Ausführungsbeispiel einer Maschine nach der Erfindung mit Leiteinrichtung zur Erzeugung eines bestimmten Vordralls wiedergegeben. Die Leiteinrichtung 19, die eine Mehrzahl von Leitschaufeln 22 umfasst, ist nicht ringförmig unmittelbar vor oder nach dem Axialventilator 5 angeordnet, sondern kommt einseitig (auf 3, 6, 9. oder 12 Uhr; im dargestellten Beispiel auf 6 Uhr-Position) im Saugraum 10 des Axialventilators 5 oder im untenliegenden Kaltgasraum (Ansaugraum) 15 zu liegen. Letzteres nur, wenn die Ansaugung aus 6 Uhr-Richtung erfolgt. Der grosse Vorteil besteht darin, dass die Leiteinrichtung (Drallerzeugungseinrichtung) 19 abgewickelt (entlang einer geraden Linie) angeordnet ist und eine Verstellung der Leitschaufeln 22 mit einem Gestänge über bzw. mit Zahnräder(n) von ausserhalb des Gehäuses 2 erfolgen kann.

Die Drallveränderung, die mit einer Winkelverstellung der Leitschaufeln 22 der Leiteinrichtung 19 von einem Mitdrall (zur Leistungsreduktion bei z.B. Kühlerausfall) bis zu einem Gegendrall (zur Leistungserhöhung bei z.B. Dauer-Überlast) erfolgen kann, kann von Hand oder über einen Stellmotor temperatur- oder leistungsabhängig erfolgen.

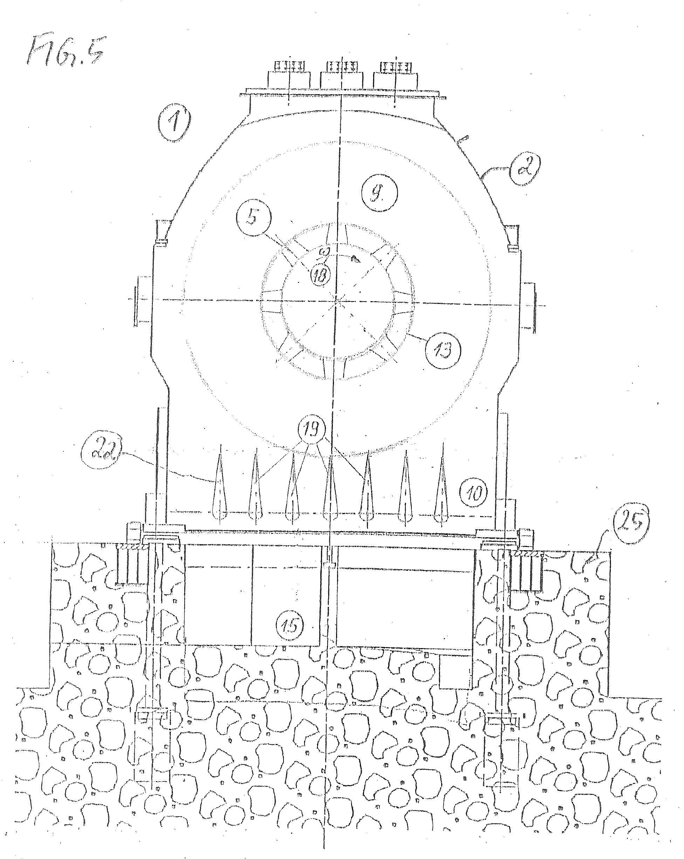

Fig. 5 zeigt die Leiteinrichtung 19 im Saugraum 10 des Axialventilators 5 in einer (neutralen, mittleren, geraden) Einstellung, so dass die Anströmung des Axialventilators 5 mit Gegen- sowie Mitdrall erfolgt. Dieser Fall entspricht im wesentlichen der Konfiguration ohne Leiteinrichtung. Die Nachteile sind daher bereits vorstehend erklärt. Dieser Fall ist als Nennpunkt/Auslegepunkt einzustufen (heutiger Zustand ohne diese Leitschaufeln).

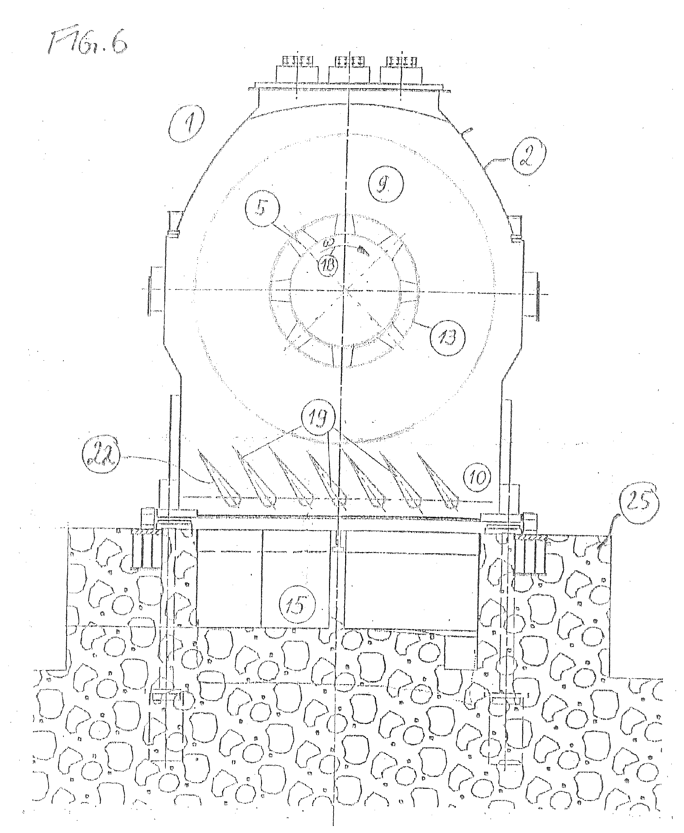

Fig. 6 zeigt die Leitschaufeln 22 der Leiteinrichtung 19 in einer Stellung, die im Saugraum 10 für den Axialventilator 5 über dem gesamten Umfang einen Mitdrall erzeugen, so dass die Kennlinie des Axialventilators 5 flacher verläuft, der Arbeitspunkt tiefer liegt, was zu einer Leistungsreduktion bei annähernd gleichbleibendem Ventilator-Wirkungsgrad für den Fall eines Generatorbetriebs mit Teillast oder Kühlerausfall zur Anwendung kommt.

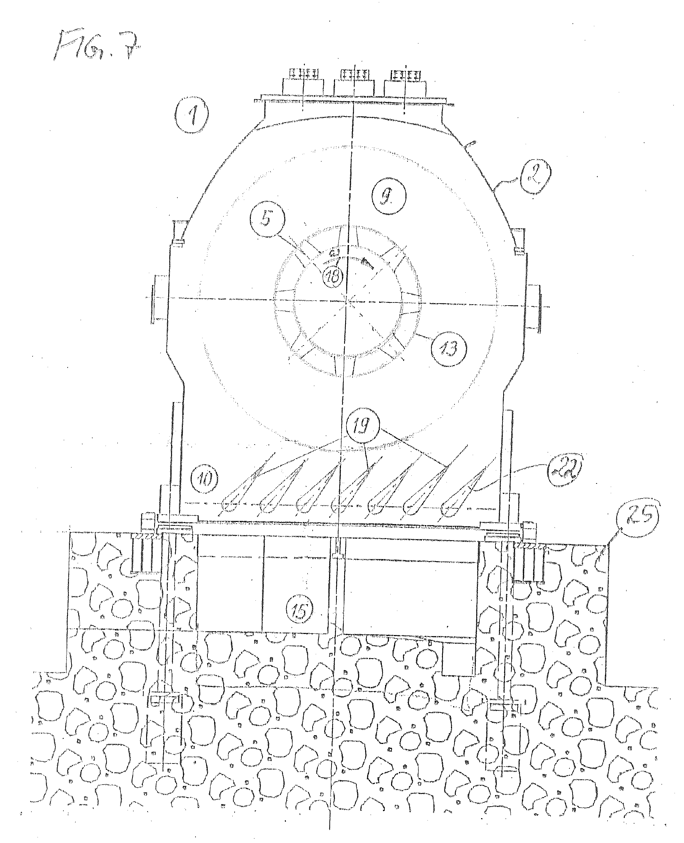

Fig. 7 zeigt die Leitschaufeln 22 der Leiteinrichtung 19 in einer Stellung, die im Saugraum 10 für den Axialventilator 5 über dem gesamten Umfang einen Gegendrall zur Drehrichtung 18 des Axialventilators 5 erzeugt, so dass die Kennlinie des Ventilators angehoben wird, der Arbeitspunkt höher liegt, was zu einer Leistungssteigerung für den Fall eines Generatorbetriebs mit ständiger Überlast oder dauernde Leistungserhöhung zur Anwendung kommt.

Das Neue dieses Gedankens ist, dass die Leiteinrichtung 19 für das Fördermedium/Kühlmedium nicht koaxial zum Axialventilator 5 auf gleicher Ebene angeordnet ist, sondern konstruktiv und fertigungstechnisch günstig im Gehäuse 2 des Generators 1 so integriert wird, dass der Vordrall für den Axialventilator 5 in einfacher Weise von Mitdrall auf Gegendrall verändert werden kann. Dabei kann es zweckmässig sein, dass die Leitschaufeln bei bestimmten Winkeln feststellbar sind bzw. arretiert werden können.

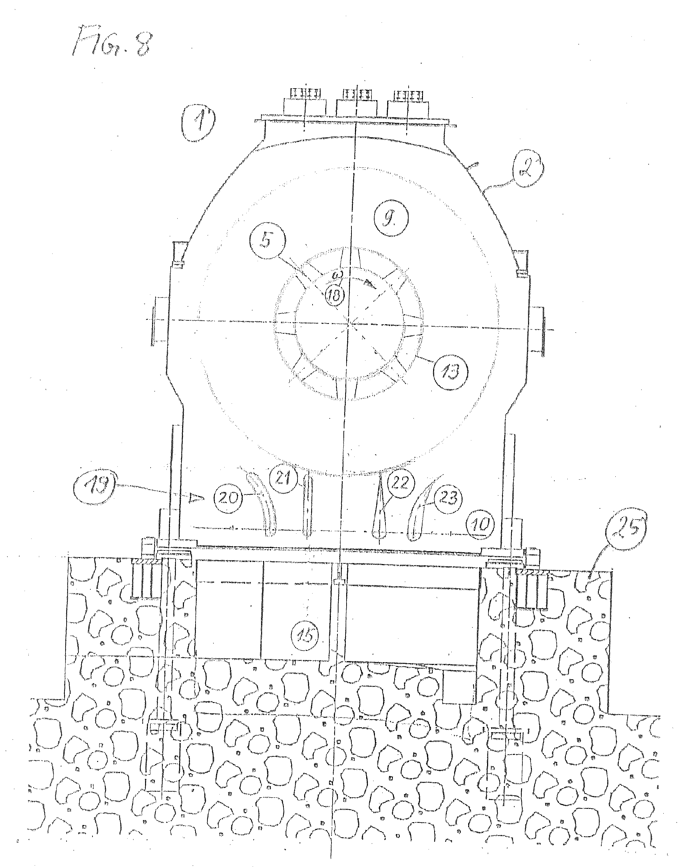

Fig. 8 zeigt anhand von einzelnen Leitschaufeln weitere mögliche Ausführungsformen 20, 21, 22, 23 der Leitschaufeln der Leiteinrichtung 19. Die Ausbildung der Leitschaufeln kann erfolgen als:
- Blechprofil gebogen (Leitschaufel 20)
- Blechprofil gestreckt (Leitschaufel 21)
- Tropfenprofil gestreckt (Leitschaufel 22, s.o.)
- Tropfenprofil gebogen (Leitschaufel 23).

Insgesamt zeichnet sich die Erfindung durch folgende charakteristischen Merkmale aus:
- Anordnung einer Leiteinrichtung mit Leitblechen/schaufeln in Turbogenerator-Gehäusen zur Erzeugung eines Vordralles für den Axialventilator, um die Ventilatorkennlinie p = f[V] zu beeinflussen und damit die aufgenommene Ventilatorleistung der Generatorleistung - den erforderlichen Kühlungsverhältnissen - anzupassen.
- Die Leitschaufeln bestehen aus einem den Anforderungen angepassten Material.
- Die Leitschaufeln bestehen vorzugsweise aus geraden oder gebogenen Blechen oder Tropfenprofilen.
- Die Leitschaufeln sind drehbar gelagert und können im Winkel verstellt werden.
- Die Verstellung der Leitschaufelwinkel kann mittels einer mechanischen Einrichtung (Gestänge) von Hand oder automatisch, z.B. elektronisch, über einen Stellmotor oder dgl., erfolgen.
- Die Leitschaufeln können bei besonderen Winkeln arretiert werden.
- Die Leitschaufel-Winkelverstellung lässt sich besonders vorteilhaft auf Axialventilatoren mit unverstellbaren Laufschaufeln (geschweisste oder fest verschraubte Anordnung) anwenden.

### BEZUGSZEICHENLISTE

- 1: Turbogenerator
- 2: Gehäuse
- 3: Stator
- 4: Rotor
- 5: Axialventilator
- 6: Kühler
- 7,8: Kühlmediumströmung
- 9: Innenverschalung
- 10: Saugraum
- 11: Druckraum
- 12,13: Spitzenabdeckung
- 14: Lager
- 15: Kaltgasraum (Ansaugraum)
- 16: Zuströmung (Mitdrall)
- 17: Zuströmung (Gegendrall)
- 18: Drehrichtung
- 19: Leiteinrichtung (Drallerzeugungseinrichtung)
- 20,..,23: Leitschaufel
- 24: Aussenverschalung
- 25: Fundament

## Patentansprüche

1. Gasgekühlte, rotierende elektrische Maschine, insbesondere Turbogenerator (1), mit einem drehbar gelagerten Rotor (4) und einem den Rotor (4) konzentrisch umgebenden Stator (3), welche in einem Gehäuse (2) untergebracht sind, wobei zur Kühlung der Maschine an dem Rotor (4) stirnseitig wenigstens ein Axialventilator (5) angeordnet ist, welcher ein gasförmiges Kühlmedium aus einem koaxialen Saugraum (10) ansaugt und in einen Druckraum (11) drückt, **dadurch gekennzeichnet, dass** im Bereich des Saugraumes (10) auf einer Seite zur Veränderung der Kennlinie des Axialventilators (5) eine verstellbare Leiteinrichtung (19; 20,..,23) vorgesehen ist, mittels derer das in den Saugraum (10) einströmende Kühlmedium auf die Drehrichtung (18) des Axialventilators (5) bezogen wahlweise mit einem Mitdrall oder einem Gegendrall oder einer Mischung aus beiden Drallarten beaufschlagt wird.

2. Maschine nach Anspruch 1, **dadurch gekennzeichnet, dass** der Saugraum (10) mit einem auf einer Seite ausserhalb der Maschine angeordneten Kaltgasraum (15) in Verbindung steht, aus welchem das rückgekühlte Kühlmedium in den Saugraum (10) einströmt, und dass die Leiteinrichtung (19; 20,..,23) zwischen dem Kaltgasraum (15) und dem Saugraum (10) angeordnet ist.

3. Maschine nach einem der Ansprüche 1 oder 2, **dadurch gekennzeichnet, dass** die Leiteinrichtung (19; 20,..,23) eine Mehrzahl von parallel stehenden, verstellbaren Leitschaufeln (20,..,23) umfasst.

4. Maschine nach Anspruch 3, **dadurch gekennzeichnet, dass** die Leitschaufeln (20,..,23) der Leiteinrichtung (19) in einer quer zur Zuströmrichtung des Kühlmediums in den Saugraum (10) verlaufenden Linie hintereinander angeordnet und in ihrer Winkelstellung relativ zur Zuströmrichtung verstellbar sind.

5. Maschine nach einem der Ansprüche 3 oder 4, **dadurch gekennzeichnet, dass** die Leitschaufeln (20,..,23) gemeinsam verstellbar sind.

6. Maschine nach einem der Ansprüche 3 bis 5, **dadurch gekennzeichnet, dass** die Leitschaufeln (20,..,23) von ausserhalb des Gehäuses (2) mittels einer mechanischen Betätigungsvorrichtung, insbesondere eines Gestänges, manuell und/oder automatisch verstellbar sind.

7. Maschine nach einem der Ansprüche 3 bis 6, **dadurch gekennzeichnet, dass** zur Verstellung der Leitschaufeln (20,..,23) ein Stellmotor vorgesehen ist.

8. Maschine nach einem der Ansprüche 3 bis 7, **dadurch gekennzeichnet, dass** die Leitschaufeln (20,..,23) alle dieselbe Schaufelform aufweisen.

9. Maschine nach einem der Ansprüche 3 bis 8, **dadurch gekennzeichnet, dass** die Leitschaufeln (21, 22) eine gestreckte Schaufelform aufweisen.

10. Maschine nach Anspruch 9, **dadurch gekennzeichnet, dass** die Leitschaufeln (21) jeweils aus einem Blech bestehen.

11. Maschine nach Anspruch 9, **dadurch gekennzeichnet, dass** die Leitschaufeln (22) ein Tropfenprofil aufweisen.

12. Maschine nach einem der Ansprüche 3 bis 8, **dadurch gekennzeichnet, dass** die Leitschaufeln (20, 23) eine gebogene Schaufelform aufweisen.

13. Maschine nach Anspruch 12, **dadurch gekennzeichnet, dass** die Leitschaufeln (20) jeweils aus einem Blech bestehen.

14. Maschine nach Anspruch 12, **dadurch gekennzeichnet, dass** die Leitschaufeln (23) ein Tropfenprofil aufweisen.

15. Maschine nach einem der Ansprüche 1 bis 14, **dadurch gekennzeichnet, dass** der Axialventilator (5) mit feststehenden Laufschaufeln ausgestattet ist.

16. Verfahren zum Betrieb einer Maschine nach einem der Ansprüche 1 bis 15, **dadurch gekennzeichnet, dass** die Verstellung der Leiteinrichtung (19) bzw. der Leitschaufeln (20,..,23) temperatur- und/oder leistungsabhängig erfolgt.
